# EUROPEAN PATENT APPLICATION

(11) **EP 4 592 538 A1**
(43) Date of publication of application: **30.07.2025**
(21) Application number: 25153515.9
(22) Date of filing: 23.01.2025
(51) Int. Cl.: F16B 5/02, B33Y 80/00, F16B 37/04

(54) **FIXING SYSTEM**

(30) Priority: 26.01.2024 IT 202400001548
(71) Applicant: G.D S.p.A., 40133 Bologna (IT)
(72) Inventor: MONTANARI, Dario, 40133 BOLOGNA (IT); MILANESI, Giovanni, 40133 BOLOGNA (IT)
(74) Representative: Studio Torta S.p.A.

(57) **Abstract**

A fixing system is provided with a first element (2), which is at least partly delimited by two parallel faces (3) and has at least one opening (4), which is obtained through the first element (2), extends between the two faces (3) and is engaged, in a sliding manner in at least one moving direction (13, 14), by a bushing (5), which is provided with a threaded hole (6) and is locked on the first element (2) by means of two coupling flanges (11) obtained at the free ends of the bushing (5); a fixing screw (8) being screwed through the threaded hole (6) for locking the first element (2) on a second element (9).

## Description

### CROSS-REFERENCE TO RELATED APPLICATIONS

This patent application claims priority from Italian patent application No. 102024000001548 filed on January 26, 2024, the entire disclosure of which is incorporated herein by reference.

### TECHNICAL FIELD

The invention relates to a fixing system.

In particular, the invention relates to a fixing system of the type comprising a first element, in particular an element of a machine tool or operating machine for the production of smoking articles; and a plurality of fastening screws for locking the first element on a second element, in particular an element of a machine tool or operating machine for the production of smoking articles.

### PRIOR ART

Generally speaking, each fastening screw extends through a first hole made through the first element and is screwed into a second hole made through the second element. Known fixing systems of the type described above suffer from some drawbacks, which are mainly due to the fact that, when the two holes associated with a fastening screw are not coaxial to one another, the fastening screw cannot be screwed into the second element, thus preventing the first element from being correctly fixed on the second element.

### DESCRIPTION OF THE INVENTION

The object of the invention is to provide a fixing system that is not affected by the aforementioned drawbacks and can be manufactured in a simple and economic fashion.

According to the invention, there is provided a fixing system as claimed in the appended claims.

### BRIEF DESCRIPTION OF THE DRAWINGS

The invention will now be described with reference to the accompanying drawings showing a non-limiting embodiment thereof, wherein:
- figure 1 is a schematic perspective view, with parts removed for greater clarity, of a preferred embodiment of the fixing system according to the invention;
- figure 2 is an exploded perspective view, with parts removed for greater clarity, of the fixing system of figure 1;
- figure 3 is a schematic perspective view, with parts removed for greater clarity, of a variant of the fixing system of figures 1 and 2; and
- figure 4 is an exploded perspective view, with parts removed for greater clarity, of the fixing system of figure 3.

### PREFERRED EMBODIMENTS OF THE INVENTION

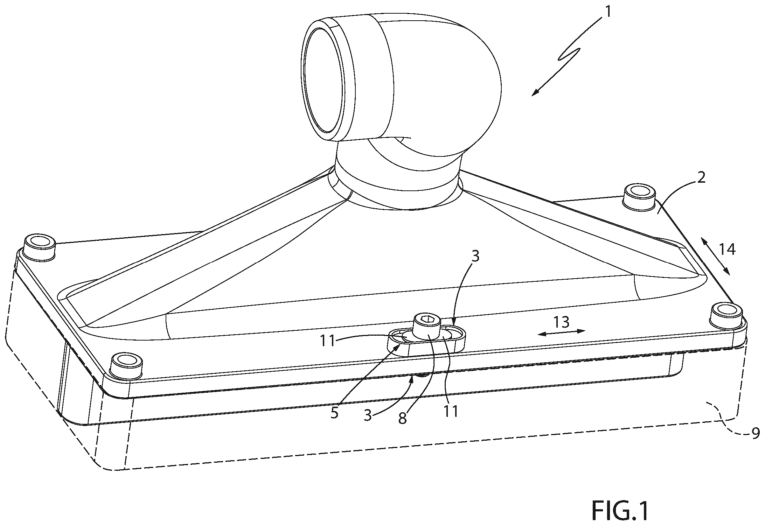

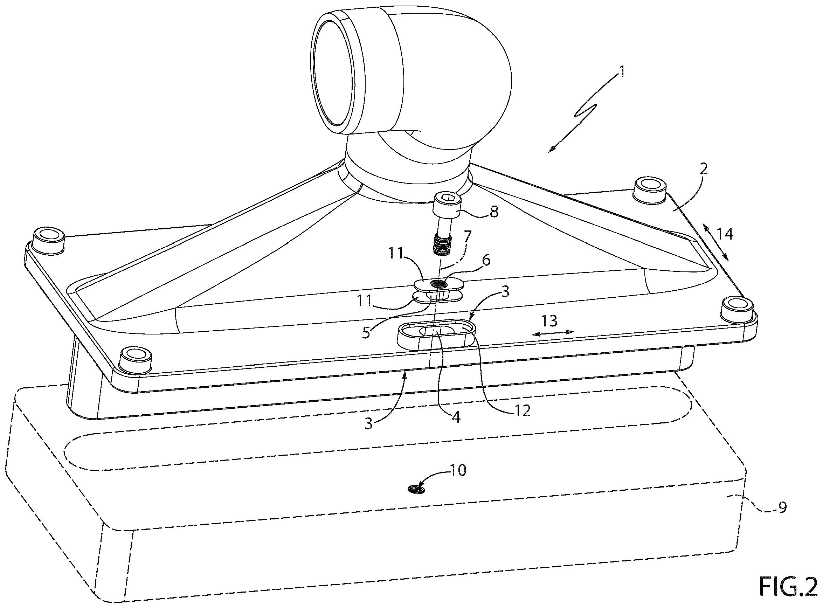

With reference to figures 1 and 2, number 1 indicates, as a whole, a fixing system that can be used, preferably but not necessarily, in a machine tool or in an operating machine for the production of smoking articles such as, for example, cigarettes.

The fixing system 1 comprises a first element 2, in this specific case a suction hood, at least partially delimited by two flat faces 3, which are parallel to and opposite one another.

The element 2 has at least one opening 4, advantageously, though not in a limiting manner, a through opening, which, even more advantageously, though not in a limiting manner, is obtained through the element 2 and extends between the faces 3.

The fixing system 1 further comprises, for each opening 4: a respective bushing 5, which extends through the opening 4 and is provided with a threaded hole 6 having a longitudinal axis 7 perpendicular to the faces 3; and a respective fixing screw 8 for locking the element 2 on a second element 9, advantageously provided with a corresponding threaded hole 10.

Advantageously, though not in a limiting manner, the fixing screw 8 is screwed through the threaded hole 6 and can be screwed through the threaded hole 10 to lock the element 2 on the element 9. In other words, in use, the screw 8 is screwed into the hole 6 and is screwed into a threaded hole 10 obtained in the element 9.

The bushing 5 is provided with two coupling flanges 11 obtained at the ends of the bushing 5 to lock the bushing 5 on the element 2 perpendicularly to the faces 3.

In the advantageous, though non-limiting embodiment shown in figures 1 and 2, the bushing 5 has a length, measured parallel to the axis 7, that is smaller than a thickness of the corresponding portion of the element 2, also measured parallel to the axis 7. As a consequence, a flange 11 is in contact with a relative face 3 and the other flange 11 is obtained between the faces 3.

Obviously, according to a further advantageous variant, which is not limiting and is not shown herein, the bushing 5 has a length, measured parallel to the axis 7, that is equal to a thickness of the corresponding portion of the element 2, also measured parallel to the axis 7. As a consequence, in this case, advantageously, though not in a limiting manner, the flanges 11 are in contact with the relative faces 3.

In particular, in the specific case shown in figures 1 and 2, a flange 11 is housed inside a recess 12 obtained on the relative face 3 and the other flange 11 is housed inside a recess (not shown) obtained between the faces 3.

The opening 4 is configured to allow the bushing 5 to move, in particular to slide, inside the opening 4 in at least one moving direction 13 parallel to the faces 3.

In other words, the opening 4 has the shape of an elongated slot and a size, measured parallel to the direction 13, that is larger than a size of the bushing 5, also measured parallel to the direction 13.

Alternatively or in addition, according to a variant that is not shown herein, the opening 4 has a size, measured in a moving direction 14 that is transverse to the direction 13 and parallel to the faces 3, that is greater than a size of the bushing 5, also measured parallel to the direction 14. In this way, the bushing 5 can make, relative to the element 2, movements parallel to the faces 3 comprising a motion component parallel to the direction 13 and/or a motion component parallel to the direction 14. Preferably, though not in a limiting manner, the element 2 and the bushing 5 are manufactured simultaneously by means of one single additive manufacturing process (also known as 3D printing), namely by means of an industrial process that, starting from a digital 3D model, makes the element 2 and the bushing 5 by adding one layer on top of the other (some examples of technologies that can be used in additive manufacturing are stereolithography, fused deposition modelling, also known as FDM, selective laser sintering, also known as SLS, or multi jet fusion, also known as MJF technology).

Preferably, though not necessarily, the element 2 and the bushing 5 are made of a plastic material (plastic or resin) so as to reduce the production cost and the weight of the fixing system 1 and the plastic material is reinforced with carbon or glass to increase the structural characteristics (for example, Nylon 12CF, which is a thermoplastic composite for 3D printing reinforced with carbon with excellent structural characteristics).

In the case shown in figures 1 and 2, the additive manufacturing process makes it possible to obtain one of the flanges 11 between the faces 3.

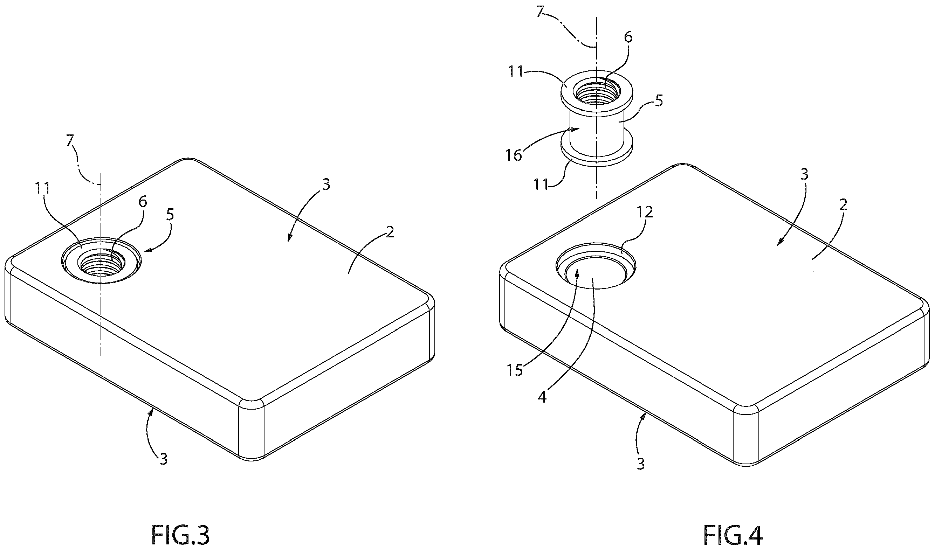

The variant of figures 3 and 4 differs from the one shown in the preceding figures only in that, in it, the opening 4 is delimited by an inner wall 15 with a cylindrical shape having a diameter that is larger than a diameter of an outer wall 16 with a cylindrical shape of the bushing 5.

As a consequence, the bushing 5 is radially movable inside the opening 4.

The fixing system 1 has numerous advantages, some of which are due to the fact that the mobility of the bushing 5 inside the opening 4 makes it possible to position the hole 6 of the bushing 5 in a position that is always coaxial to the hole 10 of the element 9 and, therefore, to correctly screw the screw 8 into the hole 10 itself, compensating for any manufacturing or positioning errors that could arise when making the elements to be fixed together and, thus, increasing the flexibility of the fixing system.

In addition, the mutual configuration of the bushing 5 and the screw 8 ensures that once the screw 8 is screwed to the bushing 5 of the element 2, the screw 8 remains connected to the bushing 5 and, hence, to the element 2, even when it is disconnected from the element 9.

### LIST OF THE REFERENCE NUMBERS OF THE FIGURES

- 1: fixing system
- 2: first element
- 3: faces
- 4: opening
- 5: bushing
- 6: threaded hole
- 7: longitudinal axis
- 8: fixing screw
- 9: second element
- 10: threaded hole
- 11: flanges
- 12: recess
- 13: moving direction
- 14: moving direction

## Claims

1. A fixing system (1) comprising a first element (2), which is at least partly delimited by two parallel faces (3) and has at least one opening (4), which is obtained through the first element (2) and extends between said faces (3); and, for each opening (4), a respective bushing (5), which extends through at least part of the opening (4) and is provided with a threaded hole (6) having a longitudinal axis (7) perpendicular to said faces (3), and a respective fixing screw (8), which can be screwed at least through the threaded hole (6) so as to lock the first element (2) on a second element (9); and **characterized in that** the bushing (5) is provided with two coupling flanges (11) obtained at the ends of the bushing (5) for locking the bushing (5) on the first element (2) perpendicularly to the faces (3), and **in that** the opening (4) is configured to allow the bushing (5) to move inside the opening (4) in at least one moving direction (13, 14).

2. The fixing system (1) according to claim 1, wherein the first element (2) is manufactured by means of additive manufacturing.

3. The fixing system (1) according to claim 1 or 2, wherein the bushing (5) is manufactured by means of additive manufacturing.

4. The fixing system (1) according to any one of the preceding claims, wherein the bushing (5) is delimited by an outer wall (16) with a cylindrical shape and the opening (4) is delimited by an inner wall (15) with a cylindrical shape having a diameter that is larger than a diameter of the outer wall (16) of the bushing (5).

5. The fixing system (1) according to any one of the claims from 1 to 3, wherein the opening (4) has an oblong shape and a size, measured parallel to the moving direction (13, 14), that is larger than a size of the bushing (5), also measured parallel to the moving direction (13, 14); the opening (4) being engaged by the bushing (5) in a sliding manner.

6. The fixing system (1) according to any one of the preceding claims, wherein the opening (4) is configured to allow the bushing (5) to move inside the opening (4) in at least two distinct moving directions (13, 14).

7. The fixing system (1) according to any one of the preceding claims, wherein each moving direction (13, 14) is parallel to said faces (3).

8. The fixing system (1) according to any one of the preceding claims, wherein at least one coupling flange (11) is substantially in contact with at least one relative face (3).

9. The fixing system (1) according to any one of the preceding claims, wherein at least one face (3) has a recess (12) engaged by a relative coupling flange (11) in a sliding manner.

10. The fixing system (1) according to any one of the preceding claims, wherein the first element (2) and the bushing (5) are manufactured by means of one single additive manufacturing process.
